# EUROPÄISCHE PATENTSCHRIFT

(11) **EP 2 870 207 B1**
(45) Veröffentlichungstag und Bekanntmachung des Hinweises auf die Patenterteilung: **21.11.2018**
(21) Anmeldenummer: 13733008.0
(22) Anmeldetag: 04.07.2013
(51) Int. Cl.: C09D 11/00, C09D 11/10

(54) **STRAHLUNGSHÄRTBARE TINTENSTRAHLDRUCK-TINTE AUF ACRYLATBASIS**
RADIATION CURABLE INKJET INK BASED ON ACRYLATES
ENCRE DURCISSABLE PAR RAYONNEMENT À BASE D'ACRYLATES

(30) Priorität: 05.07.2012 DE 202012006432 U
(43) Veröffentlichungstag der Anmeldung: 13.05.2015
(73) Patentinhaber: Hapa AG, 8604 Volketswil (CH)
(72) Erfinder: HOWALD, Nicole, CH-8645 Jona (CH); RRAHIMI, Migjen, CH-8623 Wetzikon (CH)
(74) Vertreter: Troesch Scheidegger Werner AG
(86) Internationale Anmeldenummer: PCT/EP2013/064146
(87) Internationale Veröffentlichungsnummer: WO 2014/006141

(56) Entgegenhaltungen:
- EP-A1- 1 331 251
- EP-A1- 1 918 337
- DE-A1-102010 018 855
- US-A1- 2010 215 921

## Beschreibung

Die vorliegende Erfindung betrifft eine strahlungshärtbare InkJet-Tinte auf Acrylatbasis, umfassend ein Pigment, ein difunktionelles Acrylat und gegebenenfalls ein drei- oder mehrfunktionelles Acrylat, eine Verbindung (A) mit einer ethylenischen Doppelbindung und einem Molekulargewicht von 90 bis 205 sowie einem Photoinitiator (B) in Form eines Acylphosphinoxids.

Verschiedene InkJet-Tinten sind im Stand der Technik bekannt, wie solche auf Lösungsmittelbasis, auf Wasserbasis oder durch Strahlung härtbare InkJet-Tinten. InkJet-Tinten auf Lösungsmittelbasis trocknen durch Verdampfen eines Lösungsmittels und enthalten daher typischerweise ein Bindemittel, ein Farbmittel und als Hauptkomponente der Bestandteile der flüssigen Phase eine Flüssigkeit mit niedrigem Siedepunkt. Das Lösungsmittel kann Wasser, ein organisches Lösungsmittel oder ein Gemisch von Lösungsmitteln mit niedrigem Siedepunkt sein, wie beispielsweise in der EP 0 314 403 A1 bzw. EP 0 424 714 A1 beschrieben. InkJet-Tinten auf Lösungsmittelbasis haben mehrere Nachteile. Einerseits sind viele Lösungsmittel nicht umweltverträglich. Andererseits müssen derartige InkJet-Tinten vor dem Aushärten trocknen, um ein gutes Druckresultat zu erzielen. Außerdem ist es aufgrund der schlechten Benetzungseigenschaften vieler Lösungsmittel für bestimmte Werkstoffe oft schwierig, damit beispielsweise verschiedene Kunststoffe, Metalle oder Ähnliches zu bedrucken.

Strahlungshärtbare InkJet-Tinten sind aus der EP 0 882 104 B1 bekannt. Derartige InkJet-Tinten enthalten 80 bis 95 Gew.-% der Gesamtzusammensetzung an polyfunktionellem alkoxyliertem und/oder polyfunktionellem polyalkoxyliertem Acrylatmonomer und mindestens einen radikalischen Photoinitiator. Ebenso bezieht sich die EP 1 593 521 auf eine strahlungshärtbare InkJet-Tinte. Diese enthält ein strahlungshärtbares Oligomer in Form ungesättigter Acrylatharze niedriger Viskosität, ein strahlungshärtbares Acrylatmonomer, ausgewählt unter polyfunktionellen alkoxylierten oder polyalkoxylierten Acrylmonomeren, die ein oder mehrere Di- oder Triacrylate umfassen, wenigstens einen radikalischen Photoinitiator und wenigstens ein oberflächenaktives Mittel. Diese InkJet-Tinte weist eine Viskosität von 0,015 Pa.s bis 0,008 Pa.s bei 40 bis 70°C und eine Oberflächenspannung von 2,0 x 10⁻⁴ bis 3,0 x 10⁻⁴ N/cm bei 40 bis 70°C auf. Das Verhältnis Oligomer: Monomer beträgt 1:4. Die bekannten lösungsmittelfreien Ink-Jet-Tinten des Standes der Technik benötigen eine relativ hohe Trocknungsenergie der jeweils eingesetzten UV-Strahler bzw. UV-Lampe und/oder zeigen gegenüber verschiedenen Lösungsmitteln eine geringe Wischfestigkeit.

Von besonderem Interesse im vorliegenden technischen Bereich ist die InkJet-Tinte, die in der EP 1 331 251 A1 offenbart ist, dies im Hinblick auf die damit erzielbaren Effekte. Diese Schrift offenbart eine strahlungshärtbare InkJet-Tinte mit einem Pigment, eine Verbindung, die zwei oder mehr ethylenische Doppelbindungen enthält, einer Verbindung, die eine ethylenische Doppelbindung enthält und ein Molekulargewicht von 90 bis 210 aufweist, 2-Benzyl-2-dimethylamino-1-(4-morpholinophenyl-) butanon-(Irgacure 369) 1 als ersten Initiator und Acylphosphinoxide als zweiten Initiator. Bevorzugt ist es, wenn diese Tinte lösungsmittelfrei ist bzw. kein nichtreaktives Lösungsmittel enthält. Ihre Viskosität liegt vorzugsweise im Bereich von 5 bis 50 mPa.s bei 25°C. Diese InkJet-Tinte zeichnet sich durch eine niedrige Viskosität, hervorragende Photopolymerisierbarkeit, ausgezeichnete Härtungseigenschaft und gute Dispersionsstabilität aus und ist gut ausdruckbar. Darüber hinaus zeigt sie eine hervorragende Adhäsion auf dem Aufzeichnungsmedium, eine ausgezeichnete Lösmittel- und Wasserbeständigkeit aus.

Diese besonderen Eigenschaften gehen möglicherweise auf den Einsatz von Acylphosphinoxid als einem der Photoinitiatoren zurück. Allerdings weist diese bekannte Tinte dadurch, dass sie nur einen einzigen weiteren definierten Photoinitiator zulässt, einen erheblichen Nachteil auf. In vielen Anwendungsfällen ist es, wie nachfolgend durch die vorliegende Erfindung gezeigt, vorteilhaft, wenn auch auf andere Photoinitiatoren zurückgegriffen werden kann, die im Einzelfall in Kombination mit einem Acylphosphinoxid zu besseren Ergebnissen führen als das bezeichnete Irgacure 369 des Standes der Technik. Dies gilt insbesondere für das Bedrucken von Faltschachteln mit nichtsaugenden Oberflächen sowie von Kunststoffolien insbesondere PP-Folien, die bisher insbesondere im Flexodruck oder Offsetdruck bedruckt wurden. Demzufolge ist es sehr zu schätzen, wenn eine flexiblere strahlungshärtende, insbesondere UV-härtende Inkjet-Tinte zur Verfügung stünde, wobei es insbesondere erstrebenswert ist, dass diese auf einem nichtsaugenden Substrat gut haftet und der gehärtete Ausdruck kratzfest ist. Zudem sollte die InkJet-Tinte auch Temperatur- und Lagerstabilität zeigen. Es sei angemerkt, dass eine Anzahl UV-härtender Tinten zwar relativ gut auf metallischen Oberflächen, wie Aluminiumoberflächen, haftet, jedoch, wie bereits zum Ausdruck gebracht, im Hinblick auf das Bedrucken von Kunststofffolien oder Faltschachteln mit nicht saugfähiger Oberflächenbeschichtung nicht hinlänglich ist. So zum Beispiel auch die im folgenden Stand der Technik beschriebenen Tinten.

Aus der DE 10 2010 018 855 A1 sind Strahlungshärtbare InkJet-Tinten auf Acrylatbasis mit einem Gehalt an Pigment(en), radikalischen Photoinitiatoren, Dispergiermittel(n) und gegebenenfalls weiteren Additiven bekannt, wobei die Tinte mindestens zwei radikalische Photoinitiatoren vom Norrish Typ I und mindestens ein strahlungshärtbares Monomer enthält, wobei Letzteres in Form eines polyfunktionellen alkoxylierten und/oder polyalkoxylierten Acrylatmonomers, das ein oder mehrere Di- und/oder Tri-Acrylate umfasst, vorliegt.

Eine photohärtbare Tintenzusammensetzung mit einer polymerisierbaren Verbindung, einem Photopolymerisator, Titanoxid als Pigment und einem Amindispersionsharz, das ein bestimmtes Masseverhältnis zum Pigment aufweist, ist aus der US 2010/0215921 A1 bekannt.

Schliesslich ist aus der EP1 918 337 A1 ein Tintensatz bestehend aus mehreren Tinten bekannt, der eine Tintenzusammensetzung A mit zumindest einer polymerisierbaren Verbindung und einem Photopolymerisationsinitiator sowie eine Tintenzusammensetzung B mit zumindest einer polymerisierbaren Verbindung enthält, wobei jede Tintenzusammensetzung für sich alleine nicht polymerisierbar ist.

Es war daher Aufgabe der vorliegenden Erfindung, die oben angesprochenen Nachteile der UV härtenden Tinten zu beheben.

Die Lösung der vorliegenden Erfindung besteht in einer strahlungshärtbaren Ink-Jet-Tinte auf Acrylatbasis, umfassend ein difunktionelles Acrylat und gegebenenfalls ein drei- oder mehrfunktionelles Acrylat, eine Verbindung (A) mit einer ethylenischen Doppelbindung und einem Molekulargewicht von 90 bis 205, insbesondere von 120 bis 205, sowie einem Photoinitiator (B) in Form eines Acylphosphinoxids, die dadurch gekennzeichnet ist, dass sie des Weiteren 0,05 bis 3,0 Gew.-%, insbesondere 0,1 bis 1,8 Gew.-% Stabilisator und 0,05 bis 1,5 Gew.-%, insbesondere 0,1 bis 1,1 Gew.-% Tensid enthält. Die Verbindung (A) liegt dabei als Acryloylmorpholin oder als Ethylenglycolphenyletheracrylat (PH(EO)A) vor. Des Weiteren kann die Ink-Jet-Tinte ein Pigment umfassen.

Wenn oben gesprochen wird von "umfassend ein Pigment, ein difunktionelles Acrylat und gegebenenfalls ein drei- oder mehrfunktionelles Acrylat", dann soll das so verstanden werden, dass beispielsweise auch zwei oder mehr Pigmente herangezogen werden können.

Es hat sich somit gezeigt, dass die von der Erfindung vorgeschlagene strahlungshärtbare InkJet-Tinte, insbesondere wenn es sich um den Einbezug von weißen Pigmenten handelt, auf einen ersten Photoinitiator im Sinne der EP 1 331 251 A1 verzichten kann, wenn sie zwingend einen Stabilisator sowie ein Tensid enthält und dabei die hierzu bezeichneten quantitativen Rahmenbedingungen einhält. Die Erfindung ist, insbesondere im Hinblick darauf, dass auch Buntpigmente einbezogen sind, im Wesentlichen flexibel, auch andere im Einzelfall besonders geeignete Photoinitiatoren heranzuziehen. Dies ist im Rahmen handwerklicher Bemühungen problemlos möglich.

Die Erfindung soll nun anhand vorteilhafter Ausgestaltungen näher erläutert werden:
Zu den quantitativen Angaben zu den verschiedenen Acrylaten, die zwingend oder fakultativ erfindungsgemäß einzusetzen sind, ist auszuführen, dass das difunktionelle Acrylat vorzugsweise in einer Menge von 30 bis 90 Gew.-%, insbesondere in einer Menge von 40 bis 85 Gew.-%, vorliegt. Das drei- oder mehrfunktionelle Acrylat liegt vorteilhafterweise in einer Menge bis zu 15 Gew.-%, insbesondere bis zu 10 Gew.-% vor, während das gleichfalls lediglich fakultativ heranzuziehende monofunktionelle Acrylat in einer Menge bis zu 20 Gew.-%, insbesondere bis zu 12 Gew.-%, vorliegen sollte.

Wenn hier von "Funktionalität" gesprochen wird, dann bedeutet das eine Funktionalität, die auf eine Doppelbindung innerhalb des jeweiligen Acrylats zurückgeht. Für die Zwecke der Erfindung sind besonders die Handelsprodukte Miramer geeignet. Hierzu findet sich nachfolgend eine Anlage 1, der mono-, di- sowie drei- und mehrfunktionelle Acrylate entnehmbar sind. Selbstverständlich ist es dem Fachmann durchaus möglich, auch Acrylate heranzuziehen, die sich nicht in der Auflistung der Anlage 1 finden, sondern fachmännisch geläufig sind.

Zu den bevorzugt einzusetzenden Acrylaten ist auszuführen: Als difunktionelles Acrylat wird vorzugsweise Hexandioldiacrylat (Miramer M200), propoxyliertes Neopentylglykol (NPG(PO2DA) (Miramer 216) und/oder das Dipropylendiacrylat (Miramer 222) herangezogen. Unter den drei- oder mehrfunktionellen Acrylaten gelten im Rahmen der Erfindung als bevorzugt das Dipentaerythritolhexaacrylat (Miramer 600), Trimethylolpropantriacrylat (Miramer 300) und/oder das ethoxylierte Trimethylolpropantriacrylat (Miramer 3130). In Einzelfällen ist es bevorzugt, ein monofunktionelles Acrylat eines Molekulargewichts von mehr als 210 zusätzlich heranzuziehen, wobei als bevorzugt gelten das Laurylacrylat (Miramer 120) und/oder das Isodecylacrylat (Miramer 130). Es sei hier darauf hingewiesen, dass sich in dieser Liste auch Verbindungen finden, die der Definition der Verbindung (A) entsprechen, was dem Fachmann unmittelbar deutlich wird.

Die angesprochenen Acrylate haben im Rahmen der Erfindung folgende Bedeutung: Das difunktionelle Acrylat ist zwingend einzusetzen. Die drei- oder mehrfunktionellen Acrylate zeigen eine vorteilhafte Auswirkung dahingehend, dass sie eine schnellere Härtung, insbesondere Oberflächenhärtung, sowie eine günstige Viskositätseinstellung bewirken. Das monofunktionelle Acrylat führt dazu, dass die ausgehärteten Drucke nicht sprödig sind, sondern auch bei Verbiegen des bedruckten Substrats nicht brechen. Diese Produkte weichen demzufolge den Ausdruck bzw. den Film auf, so dass er flexibler wird und sich so besser dem Untergrund anpassen kann.

Zu den zwingenden Bestandteilen der erfindungsgemäßen InkJet-Tinte gehört die bereits angesprochene Verbindung (A), die eine ethylenische Doppelbindung und ein Molekulargewicht von 90 bis 205 aufweist, und die insbesondere in Form des Acryloylmorpholins vorliegt. Es ist bevorzugt, wenn die Verbindung (A) in einer Menge von 10 bis 50 Gew.-%, insbesondere von 15 bis 45 Gew.-%, in der erfindungsgemäßen InkJet-Tinte enthalten ist. Das Acryloylmorpholin, insbesondere das Handelsprodukt ACMO, aber auch z.B. das der Anlage 1 entnehmbare Miramer 140, verbessert die Haftung der InkJet-Tinte auf dem jeweiligen Substrat. Zudem erhöht es die Aushärtungsgeschwindigkeit der InkJet-Tinte.

Vorteile sind mit der vorliegenden Erfindung verbunden, wenn sie einen Haftvermittler, vorzugsweise in einer Menge bis zu 7 Gew.-%, insbesondere in einer Menge bis zu 4 Gew.-%, enthalten. Die Art des Haftvermittlers ist nicht einschränkend relevant. Hierbei kann es sich insbesondere handeln um das Pentaerythritoltetrakis(3-mercaptobutanoat) (PE1).

Für die vorliegende Erfindung ist zwingend, dass der bezeichnete Photoinitiator (B) in Form eines Acrylphosphinoxids herangezogen wird. Dieser ist für die mit der Erfindung anzustrebenden Effekte, insbesondere zur Lösung der vorstehend bezeichneten Aufgabe, unabdingbar. Der Fachmann unterliegt hier keinen wesentlichen Beschränkungen. Es hat sich gezeigt, dass der Photoinitiator (B) vorzugsweise vorliegt in Form von Phenylbis-2,4,6-trimethylbenzoylphosphinoxid (Irgacure 819), 2,4,6-Trimethyl-benzoyldiphenylphosphinoxid (Double Cure TPO), Ethyl-4-dimethylaminobenzoat-Benzoyldiphenyl-phosphinoxid (Genocure EPD) und/oder Ethyl-(2,4,6-trimethyl-benzoyl)phenyl-phosphinat (Genocure TPO-L). Bei dem Einsatz dieses Photoinitiators (B) hat es sich gezeigt, dass er bei Einbezug eines Weißpigments, insbesondere Titandioxid, in der Mehrzahl der Anwendungsfälle keinen weiteren Photoinitiator benötigt. Die bevorzugte Menge an Weißpigment, insbesondere Titandioxid, beträgt bis zu 20 Gew.-%, insbesondere 10 bis 16 Gew.-%. Mit anderen Worten bedeutet das, dass die erfindungsgemäße InkJet-Tinte neben dem Photoinitiator (B) keinen weiteren Photoinitiator enthält. Anders verhält es sich in der Regel, wenn es sich bei dem einbezogenen Pigment um ein Buntpigment oder Ruß, dies vorzugsweise in einer Menge von 1,5 bis 5 Gew.-%, handelt. In einem solchen Falle ist die Erfindung dadurch sehr flexibel ausgebildet, dass keine relevante Beschränkung auf einen speziellen Photoinitiator (C), der keine Phosphinstrukturelemente aufweist, besteht. Insbesondere ist es nicht erforderlich, wie nach der Lehre der EP 1 331 251 A1, zwingend das 2-Benzyl-2-dimethylamino-1-(4-morpholinophenyl-) butanon-1 als Photoinitiator (Irgacure 369) neben dem Acylphosphinoxid als zweiten Photoinitiator (C) einzusetzen. Bevorzugt ist es, wenn der Photoinitiator (B) in der erfindungsgemäßen InkJet-Tinte in einer Menge von 2 bis 18 Gew.-%, insbesondere von 4 bis 14 Gew.-%, vorliegt.

In der Anlage 2 werden erfindungsgemäß herangezogene Photoinitiatoren (Handelsname, Strukturformel, chemische Natur) näher bezeichnet, worunter sich sowohl Photoinitiatoren (B) als auch Photoinitiatoren (C) finden. Welche Art von Photoinitiatoren den in der Anlage 2 bezeichneten Verbindungen zuzuordnen sind, geht aus dieser unmittelbar hervor. Allerdings ist es bevorzugt, wenn der Photoinitiator (C) vorliegt in Form von (2-Dimethylamino-2-(4-methyl-benyzl)-1(4-morpholin-4-yl-phenyl)-butan-1-on (Irgacure 379), 2-Hydroxy-1-{4-[4-(2-hydroxy-2-methyl-propionyl)benzyl]-phenyl}-2-methyl-propan-1-on (Irgacure 127) und/oder 4,4'-Bis(diethylamin)benzophenon (Double Cure EMK).

Oben wurde bereits darauf hingewiesen, dass die Erfindung zwingend ein Tensid bzw. ein ähnlich aktives Mittel einsetzen muss, dies unter Einhaltung der quantitativen Rahmenbedingungen von 0,05 bis 1,5 Gew.-%. Besonders bevorzugt ist es, wenn das Tensid als polyethermodifiziertes Polydimethylsiloxan (BYK-377) vorliegt.

Grundsätzlich kann die vorliegende Erfindung auch nicht-reaktive Lösungsmittel enthalten, die in der Regel keine Vorteile bieten. Daher ist es im Allgemeinen bevorzugt, dass die InkJet-Tinte lösungsmittelfrei ist, insbesondere kein nicht-reaktives Lösungsmittel enthält. In Einzelfällen ist es möglich, bis zu 10 Gew.-% Lösungsmittel, vorzugsweise weniger als 5 Gew.-%, und insbesondere weniger als 1,5 Gew.-% eines ausgewählten Lösungsmittels einzubeziehen. Hierbei kann es sich beispielsweise um Alkohole, wie Ethanol, Ketone, wie Aceton, Ester, wie Ethylacetat, Ether und dergleichen, handeln. Es gilt als bevorzugte Regel, Lösungsmittel möglichst weitgehend auszuschließen, weil diese durch das Verdampfen beim InkJet-Druck in die Umwelt gelangen können.

Vorstehend wurde bereits zum Ausdruck gebracht, dass die Erfindung sowohl Weißpigmente, Ruß sowie Buntpigmente einbeziehen kann. Dabei weist das jeweilige Pigment vorzugsweise eine mittlere Teilchengröße von 10 bis 300 nm, insbesondere von 70 bis 250 nm, auf. Die bevorzugte Menge an den Pigmenten kann wie folgt angegeben werden: für das Weißpigment bis zu 20 Gew.-%, insbesondere 10 bis 16 Gew.-%, und für Ruß und das Buntpigment bis zu 5 Gew.-%, insbesondere 1,5 bis 4 Gew.-%.

Bei der Wahl des Stabilisators, der erfindungsgemäß zwingend ist und unter klaren quantitativen Rahmenbedingungen einsetzbar ist, unterliegt die Erfindung keinen relevanten Einschränkungen. Es ist bevorzugt, dass der Stabilisator als Glycerolpropoxylat (1PO/OH)triacrylat (Genorad 16) und/oder als mit Acrylsäure verestertes Glycerolpropoxylat (CAS:52408-84-1) (Genorad 20) vorliegt.

Von Vorteil ist es, wenn der erfindungsgemäßen InkJet-Tinte Dispergiermittel einverleibt sind. Insbesondere handelt es sich hierbei um Dispergiermittel auf Basis langkettiger Polymere. Beispiele für Dispergiermittel, die im Rahmen der Erfindung besonders geeignet sind, stellen Solsperse® 24000, Solsperse® 39000, Solsperse® 35000, Solsperse® 32000, Solsperse® 76400 der Firma Lubrizol dar. Auch mit einer geeigneten Viskositätseinstellung sind Vorteile verbunden. So wird die Viskosität der erfindungsgemäßen InkJet-Tinte vorzugsweise auf 5 bis 50 mPa.s., insbesondere 5 bis 30 mPa.s bei 25°C, eingestellt.

Darüber hinaus ist es noch erwähnenswert, dass es in Einzelfällen von Vorteil ist, das Molverhältnis von monofunktionellem Acrylat, fakultativ herangezogen, zu der Verbindung (A) auf mehr als 2, insbesondere mehr als 2,2, einzustellen. Die hierfür bevorzugt geltende Rahmenbedingung für das Molverhältnis liegt zwischen 2,2 und 100. Die Einhaltung dieser Rahmenbedingung führt dazu, dass die Tinte gut auf dem jeweiligen Substrat gut haftet. Das Molverhältnis muss deswegen vorzugsweise so eingestellt sein, weil der Anteil der Verbindung (A), insbesondere ACMO als Haftvermittler größer als der Anteil des monofunktionellen Acrylats sein muss, welches mehr oder weniger eine Weichmacherfunktion ausübt. Das monofunktionelle Acrylat eines Molekulargewichts von mehr als 210 verzögert zudem die Härtungsgeschwindigkeit, während die Verbindung (A) eine beschleunigende Wirkung hat. Aus diesen Betrachtungen ergibt es sich, dass die Erfindung vorzugsweise darauf abstellt, den Anteil der Verbindung (A) (nach Molverhältnis) größer als denjenigen des monofunktionellen Acrylats einzustellen.

Gegenstand der Erfindung ist des Weiteren eine strahlungshärtbare InkJet-Tinte auf Acrylatbasis, umfassend ein difunktionelles Acrylat und gegebenenfalls ein drei- oder mehrfunktionelles Acrylat, eine Verbindung (A) mit einer ethylenischen Doppelbindung und einem Molekulargewicht von 90 bis 205 sowie einen Photoinitiator (B) in Form eines Acylphosphinoxids, dadurch gekennzeichnet, dass sie des Weiteren 0,05 bis 3,0 Gew.-%, insbesondere 0,1 bis 1,8 Gew.-% Stabilisator und 0,05 bis 1,5 Gew.-%, insbesondere 0,1 bis 1,1 Gew.-% Tensid enthält. Diese Ausbildung der Erfindung lässt sich anhand der vorstehend bezeichneten Merkmale, bei der Pigmente einbezogen sind, weiter vorteilhaft vornehmen. Mit dieser InkJet-Tinte lassen sich vorteilhaft farblose Schutzschichten auf farbigen Ausdrucken ausbilden.

Die erfindungsgemäße strahlungshärtbare InkJet-Tinte ist nicht auf die Anwendung einer bestimmten Strahlungsart beschränkt. Die Aushärtung kann beispielsweise durch Elektronenstrahlen oder auch durch UV-Strahlen erfolgen. Hierbei absorbiert der radikalische Photoinitiator die Strahlungsenergie, wodurch die Polymerisationsreaktion einleitet wird. Die ursprünglich niedrigviskose Zusammensetzung wird dann in eine ausgehärtete feste Masse überführt. Dadurch entsteht beispielsweise ein Schriftzug oder ein Bild, das sich durch eine überraschend günstige Dauerhaftigkeit, thermische Stabilität und Lichtstabilität auszeichnet und zudem noch, was einen besonderen Vorteil darstellt, wischfest ist. Als Lampen können Quecksilber-dotierte UV-Lampen mit einstellbarer Strahlungsleistung verwendet werden, alternativ auch Eisen-, Thallium- oder anders dotierte Dampflampen. Zudem ist eine Härtung mit einer LED-Lampe möglich und vorteilhaft.

Die oben beschriebene Erfindung sowie auch die dargestellten bevorzugten Ausgestaltungen lassen es vorteilhaft zu, dass in der InkJet-Tinte noch weitere Additive enthalten sind. Dabei handelt es sich vorzugsweise um solche in Form von UV-Absorptionsmitteln, Antioxidantien, optischen Aufhellern, Benetzungsmitteln, Antischäumungsmitteln, insbesondere in Form von Naphthapetroleum (CAS-Nr. 64741-65-7/BYK-088), elektrische Leitfähigkeit hervorrufende Mitteln, Bioziden, Weichmachern, tixotropen Mitteln, organischen und/oder anorganischen Füllstoffen und/oder antistatischen Mitteln.

Die besonderen Vorteile, die mit den der erfindungsgemäßen strahlungshärtbaren InkJet-Tinte verbunden sind, lassen sich kurz wie folgt darstellen: Zunächst ist, wie bereits gezeigt, die Erfindung flexibler in der Auswahl der Photoinitiatoren. So kann im Falle des Einsatzes eines Weißpigments sogar auf den Photoinitiator (C) verzichtet werden. Anderenfalls ist man, wenn man einen Photoinitiator (C) heranzieht, nicht, wie der Eingangs geschilderte Stand der Technik, auf eine ganz konkrete Verbindung eingeschränkt. Weitere Vorteile ergeben sich aus den vorstehenden Betrachtungen sowie aus den nachfolgenden Beispielen.

Die Erfindung soll nachfolgend anhand von Beispielen noch mehr erläutert werden:

### Beispiel 1 (Herstellungsbeispiel)

Der Stabilisator (z.B. Genorad 16), das difunktionelle Acrylat (Miramer), die Verbindung (A) mit einer ethylenischen Doppelbindung und einem Molekulargewicht von 90 bis 205 (ACMO), das Antischäummittel (Byk 088) und das Tensid (Byk 377) werden 10 min lang in einem üblichen Mischer vermischt. Darauf wird auf 45°C erhitzt. Unter weiterem Rühren werden die Photoinitiatoren zugegeben. Es wird weitergerührt, bis alle Photoinitiatoren gelöst sind. Es folgt ein Abkühlen auf 25°C. Dann wird die Pigmentdispersion vorgelegt und mit einem Disolver die bezeichnete obige Mischung langsam eingerührt. Es wird dann 0,5 bis 1 Std. weitergerührt. Die erhaltene Dispersion wird durch einen Filter auf <2 µm eingestellt.

### Vergleichsbeispiele 2 und 3

Nach der Verfahrenslehre des Beispiels 1 wurden die folgenden Rezepturen der Vergleichseispiele 2 und 3 in eine erfindungsgemäße InkJet-Tinte überführt. Es fehlt hier die erfindungsgemäß einzusetzende Verbindung (A) (ACMO).

| Vergleichsbeispiele | 2 | 3 |
|---|---|---|
| Genorad 20 | 0.64 | 0.64 |
| Miramer M200 | 52.9 | 50.9 |
| Byk 377 | 0.4 | 0.4 |
| Byk 088 | 0.06 | 0.06 |
| Irgacure 819 | 5 | 5 |
| Acylphosphinoxid | 6 | 6 |
| Irqacure 127 | | 2 |
| M2W1 (30%ige Dispersion von TiO2 in M200) | 35 | 35 |
| Total | 100 | 100 |
| Viskosität mPas 25°C | 10.6 | 11.60 |
| Härtung 4W LED [m/min] | 25 | 25 |
| H-Strahler @ 25m/min Dosis [mJ/cm²] | 100 | 80 |
| Viskosität nach 3Wochen @ 60°C [mPas] | 10.6 | 11.4 |

Bewertung: Es handelt sich hierbei um schlecht haftende Tinten, jedoch mit sehr guter Stabilität.

### Beispiele 4, 5, 6 (Einfluss von ACMO und PE1 auf Haftung und Stabilität)

Nach der Verfahrenslehre des Beispiels 1 wurden die folgenden Rezepturen der Beispiele 4, 5 und 6 in eine erfindungsgemäße InkJet-Tinte überführt.

| Beispiele | 4 | 5 | 6 |
|---|---|---|---|
| Genorad 20 | 1 | 1 | 1 |
| Miramer M200 | 36.54 | 37.04 | 33.54 |
| ACMO | 21 | 21 | 21 |
| Byk 377 | 0.4 | 0.4 | 0.4 |
| Byk 088 | 0.06 | 0.06 | 0.06 |
| Irgacure 819 | 5 | 3 | 3 |
| Acylphosphinoxid | 6 | 3.5 | 3 |
| PE1 | | 4 | 8 |
| M2W1 (30%ige Dispersion von TiO2 in M200) | 30 | 30 | 30 |
| Total | 100 | 100 | 100 |
| Viskosität @ 25°C [mPas] | 11.3 | 11.2 | 12.5 |
| H-Strahler @ 25m/min Dosis [mJ/cm²] | 125 | 235 | 180 |
| Haftung auf Faltschachtel | mittel | gut | gut |
| Stabilität | gut | mittel | schlecht |
| Viskosität nach 3Wochen @ 60°C [mPas] | 11.2 | 13.6 | 22.5 |

Bewertung: Unter Einbezug von ACMO wird bereits eine Verbesserung der Haftung erreicht (Beispiel 4). Die Zugabe von PE1 verbessert die Haftung weitergehend. Bei einer zu großen Menge PE1 (Beispiel 6) verschlechtert sich jedoch die Stabilität der Tinte.

### Beispiele 7, 8, 9, 10 und 11 (Einfluss von AMCO auf die Haftung)

Nach der Verfahrenslehre des Beispiels 1 wurden die folgenden Rezepturen der Beispiele 7, 8, 9, 10 und 11 in eine erfindungsgemäße InkJet-Tinte überführt.

| Beispiele | 7* | 8* | 9 | 10 | 11 |
|---|---|---|---|---|---|
| Genorad 20 | 0.64 | 0.64 | 0.64 | 0.64 | 0.64 |
| Miramer M200 (D426) | 30.9 | 30.9 | 30.9 | 20.9 | 30.9 |
| Miramer M130 | 25 | 15 | | 10 | |
| ACMO | | 10 | 25 | 25 | 25 |
| Byk 377 | 0.4 | 0.4 | 0.4 | 0.4 | 0.4 |
| Byk 088 | 0.06 | 0.06 | 0.06 | 0.06 | 0.06 |
| Irgacure 819 | 5 | 5 | 5 | 5 | 4 |
| Acylphosphinoxid | 6 | 6 | 6 | 6 | 5 |
| Irgacure 127 | | | | | 2 |
| M2W1 (30%ige Dispersion von TiO2 in M200) | 32 | 32 | 32 | 32 | 32 |
| Total | 100 | 100 | 100 | 100 | 100 |
| Viskosität @ 25° [mPas] | 7.70 | 9.1 | 11.7 | 10.30 | 12.1 |
| H-Strahler @ 25m/min Dosis [mJ/cm²] | 260 | 230 | 80 | 125 | 80 |
| Haftung auf Faltschachtel | sehr schlecht | schlecht | gut | gut | gut |

| | | | | | |
|---|---|---|---|---|---|
| Anmerkung: * Vergleichsbeispiele | | | | | |

Bewertung: Es zeigt sich, dass die obigen Rezepturen 9 bis 11 zu einer InkJet-Tinte führen, die auf nicht-saugenden Oberflächen einer Faltschachtel gute Haftung zeigt. Die Vergleichsbeispiele 7 und 8 zeigen, dass mit Miramer M130 die erfindungsgemäße InkJet-Tinte zu einer schlechten Haftung auf der Faltschachtel führt und sehr langsam härtet, demzufolge eine hohe Strahlendosis verlangt. Bei den Beispielen 9, 10 und 11 zeigen sich demgegenüber deutlich verbesserte Werte. Die Beispiele 9 und 11 zeigen darüber hinaus, dass man die Photoinitiatoren variieren kann, ohne dass die angestrebten Eigenschaften wesentlich beeinträchtigt werden. Alle Rezepturen sind ausreichend stabil.

### Beispiele 12, 13 und 14:

(Weitere Beispiele zum Einfluss von ACMO auf die Haftung und schnellere Härtung im höherviskosen System Miramer 222 mit H-Strahler und LED Härtung)

| Beispiele | 12* | 13 | 14 |
|---|---|---|---|
| Genorad 20 | 0.64 | 0.64 | 0.64 |
| Miramer M222 | 49.9 | 29.9 | 9.9 |
| ACMO | | 20 | 40 |
| Byk 377 | 0.4 | 0.4 | 0.4 |
| Byk 088 | 0.06 | 0.06 | 0.06 |
| Irgacure 819 | 6 | 6 | 6 |
| Lucirin TPO | 5 | 5 | 5 |
| C44 (25%ige Dispersion von TiO2 in M222) | 38 | 38 | 38 |
| Total | 100 | 100 | 100 |
| Visko 25° | 17.45 | 18.66 | 19.57 |
| H-Strahler @ 25m/min Dosis [mJ/cm² | 80 | 80 | 55 |
| Härtung 4W LED Bandgeschwindigkeit m/min | 35 | 55 | 65 |
| Haftung Faltschachtel | schlecht | mittel-gut | gut |

| | | | |
|---|---|---|---|
| Anmerkung: * Vergleichsbeispiel | | | |

Bewertung: Das Vergleichsbeispiel 12 zeigt, dass das Auslassen von ACMO zu einer schlechten Haftung der Tinte auf der Faltschachtel führt, während der Einbezug nach den Beispielen 13 und 14 eine deutliche Verbesserung ergibt. Zudem ist aus der Tabelle ersichtlich, dass im Falle des Zusatzes von ACMO die Bandgeschwindigkeit bei der Härtung mit 4W LED höher eingestellt wird. Das bedeutet, dass sich erfindungsgemäß mit weniger Strahlenddosis der gewünschte Erfolg einstellt. Auch hier sind alle Tinten ausreichend stabil.

### Anlage 1

Liste der erfindungsgemäß verwendeten Acrylat-Monomere (Handelsname, chemische Bezeichnung, Abkürzung, Strukturformel)
∘ Miramer 220 : Tripropylenglycoldiacrylate, TPGDA 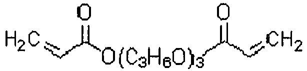
∘ Miramer 600 : Dipentaerythritolhexaacrylate, DPHA 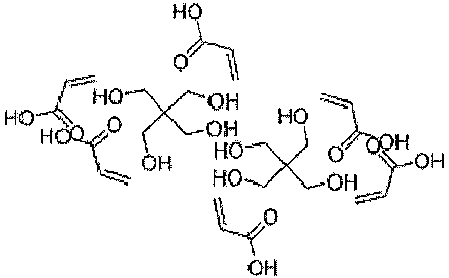
∘ Miramer 120 : Lauryl acrylate, LA 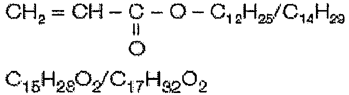
∘ Miramer 216 : Neopentylglycol Propoxylated, NPG(PO) 2 DA 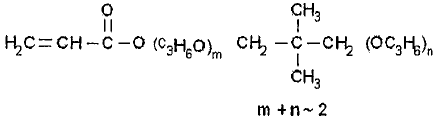
∘ Miramer 222 : Dipropylene glycol diacrylate, DPGDA 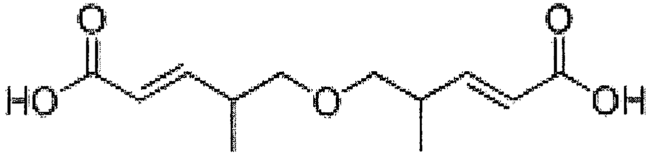
∘ Miramer 3130 : Ethoxylated Trimethylolpropanetriacrylate, TMP(EO) 3 TA 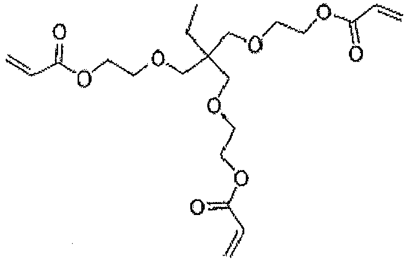
∘ Miramer 2301 : Bisphenol A 30 Mole Ethoxylated Dimethacrylate, BPA(EO) 30 DMA 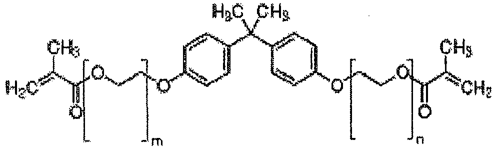
∘ Miramer 300 : Trimethylolpropanetriacrylate, TMPTA 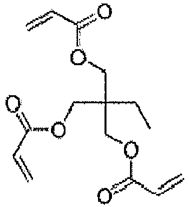
∘ Miramer 280 : Polyethyleneglycol 400 diacrylate, PEG400DA 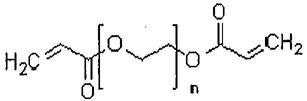
∘ Miramer 130 : Isodecyl acrylate, IDA
∘ Miramer 140: Ethylene glycol phenyl ether acrylate, PH(EO)A 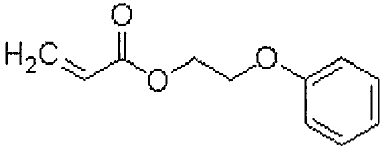
∘ Miramer 164: Ethoxylated Nonylphenol Acrylate, NP(EO)4A

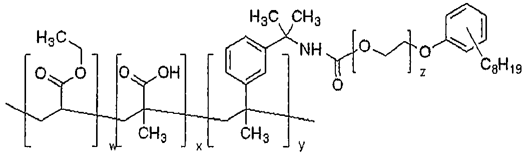

### Anlage 2

Erfindungsgemäß herangezogene Photoinitiatoren (Handelsname, Strukturformel, chemischer Name)

| | |
|---|---|
| 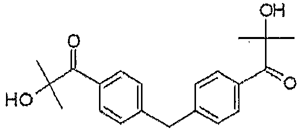 | 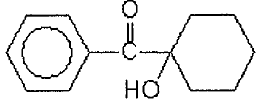 |
| Irgacure 127 : 2-Hydroxy-1-{4-[4-(2-hydroxy-2-methyl-propionyl)-benzyl]-phenyl)-2-methyl-propan-1-on (340.4g.mol⁻¹) | Irgacure 184 : 1-Hydroxycyclohexylphenylketon (204,3 g.mol⁻¹) |
| 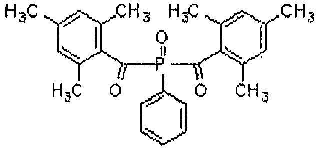 | 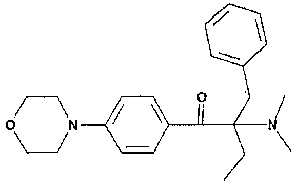 |
| Irgacure 819 : Phosphineoxid, phenylbis 2,4,6-trimethylbenzoyl) (418,5 g.mol⁻¹). *Main* *component of* Irgacure 2022, 360, 2022 | Irgacure 369 : 2-Benzyl-2-dimethylamino-1-(4-morpholinophenyl)-butanon-1 (366,5g.mol⁻¹) |
| 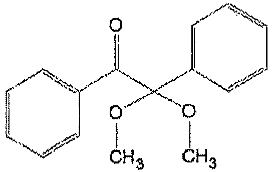 | 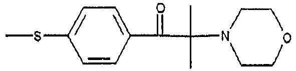 |
| Irgacure 651 : 2,2-Dimethoxy-2-Phenylacetophenon (256g.mol⁻¹) | Irgacure 907 : 2-Methyl-1[4-(methylthio) phenyl]-2-morpholinopropan-1-on (279,4g.mol⁻¹) |
| 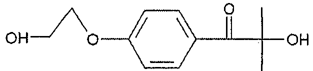 | 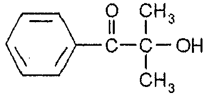 |
| Irgacure 2959 : 1-[4-(2-Hydroxyethoxy) -phenyl]-1-hydroxy-2-methyl-1-propan-1-on (224,3 g.mol⁻¹) | Darocur 1173 : 2-Hydroxy-2-methyl-1-phenyl-propan-1-on (164,2 g.mol⁻¹) |
| 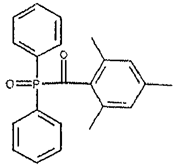 | 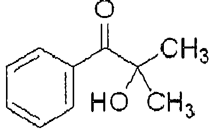 |
| Double Cure TPO : 2,4,6-Trimethyl benzoyl-diphenyl-phosphinoxid (348.37g.mol⁻¹) | Genocure DHMA: 2-Hydroxy-2-methyl-1-phenyl-1-propanon (164,2 g.mol⁻¹) |
| 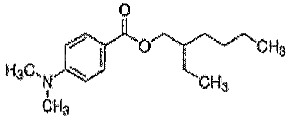 | 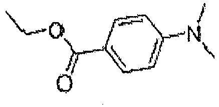 |
| Genocure EHA : 2-ethylhexyl 4-methylamino-benzoat (277,4 g.mol⁻¹) | Genocure EPD : Ethyl-4-Dimethylamino-benzoat Benzoyldiphenylphosphinoxid (193,2 g.mol⁻¹) |
| 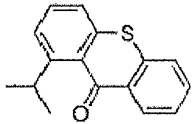 | 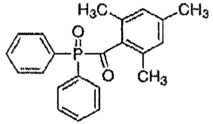 |
| Genocure ITX : Isopropylthioxanthon (254,3g.mol⁻¹) | Genocure LTM : Trimethyl (348,4g.mol⁻¹) |
| 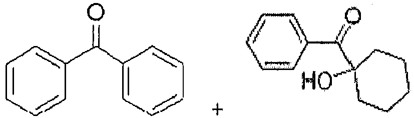 | 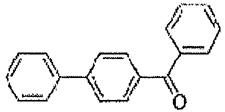 |
| Genocure LBC : 1-Hydroxycyclohexyl Phenylketon + Benzophenon (182,138 g.mol⁻¹) | Genocure PBZ : 4-Phenylbenzophenon (259 g.mol⁻¹) |
| | 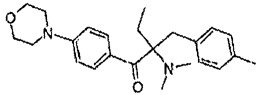 |
| Irgacure 754 | Irgacure 379 : |
| Mixture of Oxy-phenyl-acetic acid 2-[2-oxo-2-phenyl-acetoxy-ethoxy]-ethylester and Oxy-phenyl-acetic acid 2-[2-hydroxy-ethoxy]-ethylester | 2-Dimethylamino 2-(4-methyl-benzyl)-1-(4-morpholin-4-yl-phenyl)-butan-1-on (380.5g.mol⁻¹) |
| 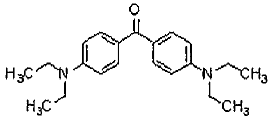 | 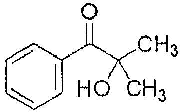 |
| Double Cure EMK : 4,4'-Bis(diethylamino) benzophenon (324,5 g.mol⁻¹) | Double Cure 173 : 2-Hydroxy-2-methylpropiophenon (164,2 g.mol⁻¹) |
| 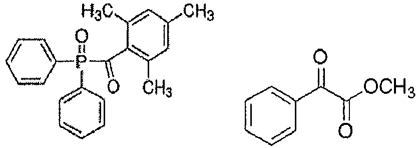 | 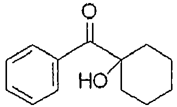 |
| Double Cure TPO-L | Double Cure 184 : |
| 75 % Diphenyl (2,4,6-trimethylbenzoyl) phosphinoxid (324,5g.mol⁻¹) + 25% Methylbenzoylformat (164,1g.mol⁻¹) | 1-Hydroxycyclohexylphenylketon (204,26 g.mol⁻¹) |

## Patentansprüche

1. Strahlungshärtbare InkJet-Tinte auf Acrylatbasis, umfassend ein difunktionelles Acrylat und gegebenenfalls ein drei- oder mehrfunktionelles Acrylat, eine Verbindung (A) mit einer ethylenischen Doppelbindung und einem Molekulargewicht von 90 bis 205 sowie einen Photoinitiator (B) in Form eines Acylphosphinoxids und 0,05 bis 3,0 Gew.-% Stabilisator, **dadurch gekennzeichnet, dass** sie des Weiteren 0,05 bis 1,5 Gew.-% Tensid enthält und die Verbindung (A) in Form des Acryloylmorpholins oder als Ethylenglycolphenyletheracrylat (PH(EO)A) vorliegt.

2. Strahlungshärtbare InkJet-Tinte nach Anspruch 1, **dadurch gekennzeichnet, dass** sie ein Pigment umfasst.

3. InkJet-Tinte nach Anspruch 1 oder 2, **dadurch gekennzeichnet, dass** sie das difunktionelle Acrylat in einer Menge von 30 bis 90 Gew.-% enthält.

4. InkJet-Tinte nach einem der Ansprüche 1 bis 3, **dadurch gekennzeichnet, dass** sie ein drei- oder mehrfunktionelles Acrylat in einer Menge bis zu 15, insbesondere bis zu 10 Gew.-% enthält.

5. InkJet-Tinte nach einem der vorhergehenden Ansprüche3, **dadurch gekennzeichnet, dass** sie zusätzlich ein monofunktionelles Acrylat, mit einem Molekulargewicht über 210 in einer Menge bis zu 20 Gew.-%, insbesondere bis zu 12 Gew.-% enthält.

6. InkJet-Tinte nach mindestens einem der vorhergehenden Ansprüche, **dadurch gekennzeichnet, dass** sie den Photoinitiator (B) in einer Menge von 2 bis 18 Gew.- %, insbesondere von 4 bis 14 Gew.-%, enthält.

7. InkJet-Tinte nach mindestens einem der vorhergehenden Ansprüche, **dadurch gekennzeichnet, dass** sie die Verbindung (A) in einer Menge von 10 bis 50 Gew.-%, insbesondere von 15 bis 45 Gew.%, enthält.

8. InkJet-Tinte nach mindestens einem der vorhergehenden Ansprüche, **dadurch gekennzeichnet, dass** es einen Haftvermittler enthält, insbesondere in Form von Pentaerythritoltetrakis(3-mercaptobutanoat) (PE1).

9. InkJet-Tinte nach Anspruch 8, **dadurch gekennzeichnet, dass** der Haftvermittler in einer Menge bis zu 7 Gew.-%, insbesondere bis zu 4 Gew.-%, vorliegt.

10. InkJet-Tinte nach mindestens einem der Ansprüche 2 bis 9, dadurchgekennzeichnet, dass sie ein Weißpigment, insbesondere Titandioxid, Ruß oder ein Buntpigment enthält.

11. InkJet-Tinte nach Anspruch 10, **dadurch gekennzeichnet, dass** sie bis zu 20 Gew.-%, insbesondere von 10 bis 16 Gew.-% Weißpigment enthält.

12. InkJet-Tinte nach mindestens einem der vorhergehenden Ansprüche, **dadurch gekennzeichnet, dass** der Stabilisator als Glycerolpropoxylat (1P0/0H)triacrylat (Genorad 16) und/oder als mit Acrylsaure verestertes Glycerolpropoxylat (CAS:52408-84-1) (Genorad 20) vorliegt.

13. InkJet-Tinte nach mindestens einem der vorhergehenden Ansprüche, **dadurch gekennzeichnet, dass** das difunktionelle Acrylat Hexandioldiacrylat (Miramer M200), propoxyliertes Neopentylglykol (NPG(PO)2DA) (Miramer 216) und/oder Dipropylendiacrylat (Miramer 222) darstellt.

14. InkJet-Tinte nach mindestens einem der vorhergehenden Ansprüche, **dadurch gekennzeichnet, dass** das drei- oder mehrfunktionelle Acrylat als Dipentaerythritolhexaacrylat (Miramer 600), Trimethylolpropantriacrylat (Miramer 300) und/oder als ethoxyliertes Trimethylolpropantriacrylat (Miramer 3130) vorliegt.

15. InkJet-Tinte nach mindestens einem der vorhergehenden Ansprüche 5 bis 14, **dadurch gekennzeichnet, dass** das monofunktionelle Acrylat als Laurylacrylat (Mi-ramer 120) und/oder Isodecylacrylat (Miramer 130) vorliegt, insbesondere mit der Funktion eines zusätzlichen Weichmachers.

16. InkJet-Tinte nach mindestens einem der vorhergehenden Ansprüche, **dadurch gekennzeichnet, dass** der Photoinitiator (B) vorliegt in Form von Phenyl-bis-2,4,6-trimethylbenzoylphosphinoxid (Irgacure 819), 2,4,6-Trimethylbenzoyl-diphenyl-phosphinoxid (Double Cure TPO), Ethyl-4-dimethylaminobenzoat-Benzoyldiphenylphosphinoxid (Genocure EPD) und/oder Ethyl-(2,4,6-trimethylbenzoyl)phenyl-phosphinat (Genocure TPO-L).

17. InkJet-Tinte nach mindestens einem der vorhergehenden Ansprüche, **dadurch gekennzeichnet, dass** sie neben dem Photoinitiator (B) einen Photoinitiator (C) erhält, der keine Phosphinoxid-Strukturelemente aufweist.

18. InkJet-Tinte nach Anspruch 17 **dadurch gekennzeichnet, dass** der Photoinitiator (C) in Form von (2-Dimethylamino-2-(4-methyl-benyzI)-1(4-morpholin-4-yl-phenyl)-butan-1-on Irgacure 379), 2-Hydroxy-1-{4-[4-(2-hydroxy-2-methyl-propionyl)benzyl]-phenyll-2-methyl-propan-1-on (Irgacure 127) und/oder 4,4'-Bis(diethylamin)benzophenon (Double Cure EMK) vorliegt.

19. InkJet-Tinte nach mindestens einem der vorhergehenden Ansprüche, **dadurch gekennzeichnet, dass** das Tensid als polyethermodifiziertes Polydimethylsiloxan (BYK-377) vorliegt.

20. InkJet-Tinte nach mindestens einem der vorhergehenden Ansprüche, **dadurch gekennzeichnet, dass** sie weitere Additive in Form von UV-Absorptionsmitteln, Antioxidantien, optischen Aufhellern, Benetzungsmitteln, Antischäumungsmitteln, insbesondere in Form von Naphthapetroleum (CAS-Nr. 64741-65-7/BYK-088), elektrische Leitfähigkeit hervorrufende Mitteln, Bioziden, Weichmachern, tixotro-pen Mitteln, organischen und/oder anorganischen Füllstoffen und/oder antistati-schen Mitteln enthält.

21. InkJet-Tinte nach mindestens einem der vorhergehenden Ansprüche, **dadurch gekennzeichnet, dass** sie losungsmittelfrei ist, insbesondere kein nicht-reaktives Lösungsmittel enthält.

22. InkJet-Tinte nach mindestens einem der Ansprüche 2 bis 20, **dadurch gekennzeichnet, dass** das Pigment eine mittlere Teilchengröße von 10 bis 300 nm, insbesondere 70 bis 250 nm aufweist.

23. InkJet-Tinte nach mindestens einem der vorhergehenden Ansprüche, **dadurch gekennzeichnet, dass** ihre Viskosität bei 25°C 5 bis 50 mPa.s, insbesondere 5 bis 30 mPa.s beträgt.

24. InkJet-Tinte nach mindestens einem der vorhergehenden Ansprüche 4 bis 22, **dadurch gekennzeichnet, dass** das Molverhältnis von monofunktionellem Acrylat zu der Verbindung (A) mehr als 2, insbesondere mehr als 2,2, beträgt.

25. InkJet-Tinte nach Anspruch 24, **dadurch gekennzeichnet, dass** das Molver-hälthis 2,2 bis 100, insbesondere 2,2 bis 35 beträgt.

## Claims

1. A radiation-curable inkjet printer ink on an acrylate base, comprising a difunctional acrylate and optionally a trifunctional or multifunctional acrylate, a compound (A) having an ethylenic double bond and a molecular weight of 90 to 205 and also a photoinitiator (B) in the form of an acylphosphine oxide and 0.05 to 3.0 wt.% stabilizer, **characterized in that** it furthermore contains 0.05 to 1.5 wt.% surfactant and the compound (A) is provided in the form of the acryloyl morpholine or as ethylene glycol phenyl ether acrylate (PH(EO)A).

2. The radiation-curable inkjet printer ink according to Claim 1, **characterized in that** it comprises a pigment.

3. The inkjet printer ink according to Claim 1 or 2, **characterized in that** it contains the difunctional acrylate in an amount of 30 to 90 wt.%.

4. The inkjet printer ink according to any one of Claims 1 to 3, **characterized in that** it contains a trifunctional or multifunctional acrylate in an amount up to 15, in particular up to 10 wt.%.

5. The inkjet printer ink according to any one of the preceding claims, **characterized in that** it additionally contains a monofunctional acrylate, having a molecular weight greater than 210, in an amount up to 20 wt.%, in particular up to 12 wt.%.

6. The inkjet printer ink according to at least one of the preceding claims, **characterized in that** it contains the photoinitiator (B) in an amount of 2 to 18 wt.%, in particular 4 to 14 wt.%.

7. The inkjet printer ink according to at least one of the preceding claims, **characterized in that** it contains the compound (A) in an amount of 10 to 50 wt.%, in particular 15 to 45 wt.%.

8. The inkjet printer ink according to at least one of the preceding claims, **characterized in that** it contains an adhesion promoter, in particular in the form of pentaerythritol tetrakis (3-mercapto butanoate) (PEI).

9. The inkjet printer ink according to Claim 8, **characterized in that** the adhesion promoter is provided in an amount up to 7 wt.%, in particular up to 4 wt.%.

10. The inkjet printer ink according to at least one of Claims 2 to 9, **characterized in that** it contains a white pigment, in particular titanium dioxide, carbon black, or a colored pigment.

11. The inkjet printer ink according to Claim 10, **characterized in that** it contains up to 20 wt.%, in particular 10 to 16 wt.% white pigment.

12. The inkjet printer ink according to at least one of the preceding claims, **characterized in that** the stabilizer is provided as glycerol propoxylate (1P0/0H) triacrylate (Genorad 16) and/or glycerol propoxylate esterified using acrylic acid (CAS:52408-84-1) (Genorad 20).

13. The inkjet printer ink according to at least one of the preceding claims, **characterized in that** the difunctional acrylate represents hexane diol diacrylate (Miramer M200), propoxylated neopentyl glycol (NPG(PO)2DA) (Miramer 216), and/or dipropylene diacrylate (Miramer 222).

14. The inkjet printer ink according to at least one of the preceding claims, **characterized in that** the trifunctional or multifunctional acrylate is provided as dipentaerythritol hexacrylate (Miramer 600), trimethylol propane triacrylate (Miramer 300), and/or ethoxylated trimethylol propane triacrylate (Miramer 3130).

15. The inkjet printer ink according to at least one of preceding Claims 5 to 14, **characterized in that** the monofunctional acrylate is provided as lauryl acrylate (Miramer 120) and/or isodecylacrylate (Miramer 130), in particular having the function of an additional softener.

16. The inkjet printer ink according to at least one of the preceding claims, **characterized in that** the photoinitiator (B) is provided in the form of phenyl-bis-2,4,6-trimethylol benzoyl phosphinoxide (Irgacure 819), 2,4,6-trimethylbenzoyl-diphenyl-phosphinoxide (Double Cure TPO), ethyl-4-dimethylaminobenzoate-benzoyldiphenyl phosphinoxide (Genocure EPD), and/or ethyl-(2,4,6-trimethylbenzoyl)phenyl phosphinate (Genocure TPO-L).

17. The inkjet printer ink according to at least one of the preceding claims, **characterized in that**, in addition to the photoinitiator (B), it contains a photoinitiator (C), which does not have phosphinoxide structural elements.

18. The inkjet printer ink according to Claim 17, **characterized in that** the photoinitiator (C) is provided in the form of (2-dimethylamino-2-(4-methyl-benyzl)-1(4-morpholine-4-yl-phenyl) butane-1-one (Irgacure 379), 2-hydroxy-1-{4-[4-(2-hydroxy-2-methyl-propionyl)benzyl]-phenyl}-2-methyl propane-1-one (Irgacure 127), and/or 4,4'-bis(diethylamine)benzophenone (Double Cure EMK).

19. The inkjet printer ink according to at least one of the preceding claims, **characterized in that** the surfactant is provided as polyether-modified polydimethyl siloxane (BYK-377).

20. The inkjet printer ink according to at least one of the preceding claims, **characterized in that** it contains further additives in the form of UV absorbers, antioxidants, optical brighteners, wetting agents, anti-foaming agents, particularly in the form of naphtha petroleum (CAS number 64741-65-7/BYK-088), agents inducing electrical conductivity, biocides, softening agents, thixotropic agents, organic and/or inorganic fillers, and/or antistatic agents.

21. The inkjet printer ink according to at least one of the preceding claims, **characterized in that** it is solvent-free, in particular does not contain any nonreactive solvent.

22. The inkjet printer ink according to at least one of Claims 2 to 20, **characterized in that** the pigment has a mean particle size of 10 to 300 nm, in particular 70 to 250 nm.

23. The inkjet printer ink according to at least one of the preceding claims, **characterized in that** its viscosity at 25°C is 5 to 50 mPa.s, in particular 5 to 30 mPa.s.

24. The inkjet printer ink according to at least one of preceding Claims 4 to 22, **characterized in that** the molar ratio of monofunctional acrylate to the compound (A) is greater than 2, in particular greater than 2.2.

25. The inkjet printer ink according to Claim 24, **characterized in that** the molar ratio is 2.2 to 100, in particular 2.2 to 35.

## Revendications

1. Encre d'imprimante à jet d'encre durcissable par rayonnement à base d'acrylate comprenant un acrylate difonctionnel et éventuellement un acrylate tri- ou multifonctionnel, une liaison (A) avec une double liaison éthylénique et un poids moléculaire de 90 à 205, ainsi qu'un photoinitiateur (B) sous forme d'un acylphosphinoxyde et 0,05 à 3,0 % en poids de stabilisateur, **caractérisée en ce qu'**elle contient en outre de 0,05 à 1,5 % en poids de tensioactif et **en ce que** la liaison (A) est présente sous la forme d'acryloylmorpholine ou d'éthylèneglycolphénylétheracrylate (PH(EO)A).

2. Encre d'imprimante à jet d'encre durcissable par rayonnement selon la revendication 1, **caractérisée en ce qu'**elle comprend un pigment.

3. Encre d'imprimante à jet d'encre selon la revendication 1 ou 2, **caractérisée en ce qu'**elle contient l'acrylate difonctionnel dans une quantité allant de 30 à 90 % en poids.

4. Encre d'imprimante à jet d'encre selon l'une des revendications 1 à 3, **caractérisée en ce qu'**elle contient un acrylate tri- ou multifonctionnel dans une quantité jusqu'à 15, en particulier jusqu'à 10 % en poids.

5. Encre d'imprimante à jet d'encre selon l'une des revendications précédentes, **caractérisée en ce qu'**elle contient en plus un acrylate monofonctionnel avec un poids moléculaire supérieur à 210 dans une quantité jusqu'à 20 % en poids, en particulier jusqu'à 12 % en poids.

6. Encre d'imprimante à jet d'encre selon au moins l'une des revendications précédentes, **caractérisée en ce qu'**elle contient le photoinitiateur (B) dans une quantité de 2 à 18 % en poids, en particulier de 4 à 14 % en poids.

7. Encre d'imprimante à jet d'encre selon au moins l'une des revendications précédentes, **caractérisée en ce qu'**elle contient la liaison (A) dans une quantité de 10 à 50 % en poids, en particulier de 15 à 45 % en poids.

8. Encre d'imprimante à jet d'encre selon au moins l'une des revendications précédentes, **caractérisée en ce qu'**elle contient un adhésif, en particulier sous la forme de pentaerythritoltetrakis(3-mercaptobutanoate) (PEI).

9. Encre d'imprimante à jet d'encre selon la revendication 8, **caractérisée en ce que** l'adhésif est présent dans une quantité jusqu'à 7 % en poids, en particulier jusqu'à 4 % en poids.

10. Encre d'imprimante à jet d'encre selon au moins l'une des revendications 2 à 9, **caractérisée en ce qu'**elle contient un pigment blanc, en particulier du dioxyde de titane, de la suie ou un pigment de couleur.

11. Encre d'imprimante à jet d'encre selon la revendication 10, **caractérisée en ce qu'**elle contient jusqu'à 20 % en poids, en particulier de 10 à 16 % en poids de pigment blanc.

12. Encre d'imprimante à jet d'encre selon au moins l'une des revendications précédentes, **caractérisée en ce que** le stabilisateur est présent sous forme de glycérol propoxylate (1P0/0H)triacrylate (Genorad 16) et/ou de glycérol propoxylate estérifié avec de l'acide acrylique (CAS:52408-84-1) (Genorad 20).

13. Encre d'imprimante à jet d'encre selon au moins l'une des revendications précédentes, **caractérisée en ce que** l'acrylate difonctionnel représente l'hexanediol diacrylate (Miramer M200), le néopentyl glycol propoxylé (NPG(PO)2DA) (Miramer 216) et/ou le dipropylène diacrylate (Miramer 222).

14. Encre d'imprimante à jet d'encre selon au moins l'une des revendications précédentes, **caractérisée en ce que** l'acrylate tri- ou multifonctionnel est présent sous forme de di-pentaérythritol-hexaacrylate (Miramer 600), de triméthylolpropantriacrylate (Miramer 300) et/ou de triméthylolpropantriacrylate éthoxylé (Miramer 3130).

15. Encre d'imprimante à jet d'encre selon au moins l'une des revendications 5 à 14, **caractérisée en ce que** l'acrylate monofonctionnel est présent sous forme de laurylacrylate (Miramer 120) et/ou d'isodécylacrylate (Miramer 130), en particulier avec la fonction d'un plastifiant supplémentaire.

16. Encre d'imprimante à jet d'encre selon au moins l'une des revendications précédentes, **caractérisée en ce que** le photoinitiateur (B) est présent sous la forme de phényl-bis-2,4,6-triméthylbenzoylphosphinoxyde (Irgacure 819), de 2,4,6-triméthylbenzoyl-diphényl-phosphinoxyde (Double Cure TPO), d'éthyl-4-diméthylaminobenzoat-benzoyldiphényl-phosphinoxyde (Genocure EPD) et/ou de phénylphosphinate d'éthyl-(2,4,6-triméthylbenzoyl) (Genocure TPO-L).

17. Encre d'imprimante à jet d'encre selon au moins l'une des revendications précédentes, **caractérisée en ce qu'**elle présente, outre le photoinitiateur (B), un photoinitiateur (C) qui ne présente aucun élément de structure phosphinoxyde.

18. Encre d'imprimante à jet d'encre selon la revendication 17, **caractérisé en ce que** le photoinitiateur (C) est présent sous la forme de (2-diméthylamino-2-(4-méthyl-benzyl)-1(4-morpholin-4-yl-phényl)-butan-1-on (Irgacure 379), 2-hydroxy-1-{4-[4-(2-hydroxy-2-méthyl-proprionyl)benzyl1]-phényl-2-méthyl-propan-1-on (Irgacure 127) et/ou 4,4'-bis-(diéthylamin)benzophénon (Double Cure EMK).

19. Encre d'imprimante à jet d'encre selon au moins l'une des revendications précédentes, **caractérisée en ce que** le tensioactif est présent sous forme de polydiméthylsiloxane à modification polyéther (BYK-377).

20. Encre d'imprimante à jet d'encre selon au moins l'une des revendications précédentes, **caractérisée en ce qu'**elle contient d'autres additifs sous forme d'absorbants UV, antioxydants, azurants optiques, agents de mouillage, agents antimousse, en particulier sous la forme de pétrole de naphta (N° CAS 64741-65-7/BYK-088), de moyens provoquant la conductivité électrique, biocides, plastifiants, agents thixotropes, matières de remplissage organiques et/ou inorganiques et/ou agents antistatiques.

21. Encre d'imprimante à jet d'encre selon au moins l'une des revendications précédentes, **caractérisée en ce qu'**elle ne contient pas de solvant, en particulier pas de solvant non-réactif.

22. Encre d'imprimante à jet d'encre selon au moins l'une des revendications 2 à 20, **caractérisée en ce que** le pigment présente une taille de particules moyenne de 10 à 300 nm, en particulier de 70 à 250 nm.

23. Encre d'imprimante à jet d'encre selon au moins l'une des revendications précédentes, **caractérisée en ce que** sa viscosité à 25 °C est comprise entre 5 et 50 mPa.s, en particulier entre 5 et 30 mPa.s.

24. Encre d'imprimante à jet d'encre selon au moins l'une des revendications 4 à 22, **caractérisée en ce que** le rapport molaire acrylate monofonctionnel/liaison (A) est supérieur à 2, en particulier de 2,2.

25. Encre d'imprimante à jet d'encre selon la revendication 24, **caractérisée en ce que** le rapport molaire va de 2,2 à 100, en particulier de 2,2 à 35.
